# FASCICULE DE BREVET EUROPEEN

(11) **EP 2 988 179 B1**
(45) Date de publication et mention de la délivrance du brevet: **14.08.2019**
(21) Numéro de dépôt: 15185582.2
(22) Date de dépôt: 17.10.2014
(51) Int. Cl.: G04G 17/08, G04G 21/04

(54) **APPAREIL MOBILE APTE À ÉQUIPER ET À PROTÉGER UNE MONTRE ET MONTRE ÉQUIPÉE D'UN TEL APPAREIL MOBILE**
MOBILGERÄT, DAS EINE ARMBANDUHR AUSRÜSTEN UND SCHÜTZEN KANN, UND MIT EINEM SOLCHEN MOBILGERÄT AUSGERÜSTETE ARMBANDUHR
MOBILE APPARATUS ABLE TO EQUIP AND PROTECT A WATCH, AND WATCH EQUIPPED WITH SUCH A MOBILE APPARATUS

(30) Priorité: 18.10.2013 FR 1360200
(43) Date de publication de la demande: 24.02.2016
(62) Demande divisionnaire de: 14798718.4
(73) Titulaire: Counas, Pascal, Daniel, Nassau (BS)
(72) Inventeur: Counas, Pascal, Daniel, Nassau (BS)
(74) Mandataire: Santarelli

(56) Documents cités:
- EP-A2- 1 835 704
- WO-A1-02/052358
- WO-A1-2013/063276
- WO-A2-2004/034835
- US-B1- 8 279 716

## Description

### Domaine technique

L'invention se situe dans le domaine des dispositifs électroniques mobiles et, plus précisément, dans le domaine des appareils mobiles destinés à être portés par un être humain. Elle concerne un tel appareil mobile destiné à équiper un objet de valeur porté autour d'une partie du corps d'une personne, par exemple une montre. Cet appareil mobile, outre ses fonctions techniques d'information et de communication, permet également de protéger un objet de valeur contre les risques de détériorations, en fonction des lieux et du changement d'activité du porteur. L'invention concerne un ensemble comprenant une montre et un appareil mobile équipant la montre, et un ensemble comprenant un appareil mobile et une plateforme interactive..

### État de la technique antérieure

D'une part, le XVI^{ème} siècle voit la naissance de l'horlogerie de luxe, avec une tradition horlogère qui se transmet depuis plus de 400 ans dans les montres mécaniques. D'autre part, la miniaturisation des circuits électroniques et l'augmentation de la capacité des sources d'alimentation portables ont entraîné l'apparition de nombreux appareils électroniques. En particulier, à la fin des années 1960, les premières montres intégrant un oscillateur à quartz sont apparues. Quelques années plus tard, l'affichage analogique à aiguilles a été remplacé par un affichage numérique. Depuis, deux voies principales de développement ont été suivies par les concepteurs de montres, les uns poursuivant la réalisation de montres essentiellement mécaniques, et les autres s'engageant dans la réalisation de montres purement électroniques. Ces deux voies se sont développées en parallèle, sans jamais - ou presque - se chevaucher.

Les montres mécaniques, ou à mouvement mécanique, ont connu un nombre considérable de développements, notamment dans la création de nouvelles complications, mais ces développements se sont presque exclusivement appuyés sur des techniques purement mécaniques, sans faire appel à un quelconque circuit électronique, hormis éventuellement l'oscillateur à quartz et son alimentation. En tout état de cause, les concepteurs de montres mécaniques ont cherché à conserver au maximum un mouvement mécanique pour la mesure et l'affichage du temps, en limitant au maximum l'introduction de circuits électroniques pour réaliser des fonctions annexes. Pour cette raison, les montres mécaniques sont souvent désignées sous l'expression "montres de tradition horlogère".

De plus, les montres mécaniques ont vu leur coût relativement inchangé en comparaison de celui des montres électroniques, lequel a fortement chuté. Ainsi, les montres mécaniques ont progressivement été considérées comme des objets de luxe, avec des prix allant de plusieurs milliers d'euros à plusieurs millions d'euros. Les montres mécaniques de luxe sont fabriquées à environ trois millions d'exemplaires par an et forment un parc mondial d'environ cent millions d'unités.

Par ailleurs, les montres électroniques ont connu un fort développement depuis l'introduction de l'affichage numérique. Le boîtier de la montre a progressivement intégré de nouvelles fonctions, au fur et à mesure de l'augmentation des capacités de calcul et de la diminution de la consommation électrique des circuits intégrés. Certaines montres ont par exemple intégré une fonction calculatrice, un système de positionnement par satellites, ou encore un lecteur de fichiers musicaux numériques. De nos jours, des montres intègrent des fonctions encore plus évoluées, et surtout plus nombreuses, en se basant le plus souvent sur une architecture matérielle et logicielle identique ou similaire à celle d'un appareil mobile. Par appareil mobile, on entend un appareil informatique adapté à être emporté et utilisé lors de déplacements d'un utilisateur. En particulier, l'appareil mobile doit comprendre des moyens d'alimentation autonome en énergie. Il peut notamment s'agir d'un ordinateur portable, d'un assistant numérique personnel ("Personal Digital Assistant" ou PDA en anglais), ou encore d'un téléphone portable intelligent ("smartphone" en anglais). En réalité, les montres électroniques correspondent aujourd'hui à des appareils mobiles prenant la forme générale d'une montre. Elles sont ainsi appelées des montres intelligentes ou "smartwatch" en anglais. Cependant, l'aspect esthétique et l'élégance technique est profondément modifié, et les fonctionnalités offertes rendent l'affichage de l'heure accessoire.

Contrairement aux montres mécaniques, les montres électroniques, même de coût élevé, ne sont pas considérées comme étant des objets de luxe, mais visent une clientèle adepte des nouvelles technologies de l'information et de la communication.

En conséquence, les montres mécaniques et les montres électroniques appartiennent à deux domaines non seulement étrangers l'un à l'autre, mais aussi hermétiques, voire opposés l'un à l'autre. Si une synergie des montres mécaniques et des montres électroniques semble inenvisageable, il n'en reste pas moins que chaque type de montre présente des limitations par rapport aux attentes d'une partie de la clientèle. D'une part, les montres électroniques actuelles souffrent d'un rejet des porteurs de montres mécaniques, ces derniers étant attachés à la noblesse mécanique et à la valeur esthétique de ces montres. D'autre part, les montres mécaniques ne remplissent aucune des fonctions accessibles par les montres intelligentes. Un utilisateur ne peut donc disposer à la fois des caractéristiques de ces deux types de montre, si ce n'est en portant deux montres différentes. Or il s'avère en pratique peu commode de multiplier les éléments portés par une personne, en particulier au poignet en bracelet.

Le document WO 2004/034835 A2 décrit un ensemble comprenant une montre et un appareil mobile apte à équiper le boîtier de la montre. L'appareil mobile comprend un module électronique apte à exécuter une application mobile, un écran d'affichage connecté au module électronique, et un support de fixation agencé pour pouvoir fixer de manière amovible l'écran d'affichage à la montre.

### Exposé de l'invention

Un but de l'invention est notamment de remédier à tout ou partie des inconvénients précités en proposant un nouveau paradigme dans le domaine des montres. Ce paradigme s'appuie sur la possibilité d'intégrer, de préférence de manière réversible, les fonctionnalités d'une montre intelligente sur une montre mécanique. Cette intégration consiste à prévoir un module électronique remplissant les fonctionnalités d'une montre intelligente, et un écran d'affichage relié au module électronique, apte à venir s'accoupler mécaniquement à une montre de type traditionnelle. Lorsque l'appareil mobile équipe une montre électronique, il permet d'ajouter des fonctionnalités à celles déjà présentes dans la montre électronique. La montre peut être portée autour de la taille, du poignet, de la cheville, ou du cou de l'être vivant.

Plus précisément, l'invention concerne un ensemble comprenant une montre et un appareil mobile apte à équiper un boîtier de la montre, tel que défini dans les revendications.

### Description des figures

D'autres avantages et particularités de l'invention apparaîtront à la lecture de la description détaillée de mises en oeuvre et de modes de réalisation nullement limitatifs, au regard de dessins annexés sur lesquels :
- la figure 1 représente, dans une vue de trois-quarts, un premier exemple d'appareil mobile dans une position fermée ; cet exemple ne représente pas l'invention telle que revendiquée, mais il aide à la compréhension de celle-ci;
- la figure 2 représente, dans une vue de côté, l'appareil mobile de la figure 1 dans une position ouverte ;
- la figure 3 représente, dans une vue de trois-quarts, l'appareil mobile des figures 1 et 2 dans la position ouverte ;
- la figure 4A représente, dans une vue de trois-quarts, un capot latéral de fermeture de l'appareil mobile des figures 1 à 3 ;
- la figure 4B représente, dans une vue de trois-quarts, une partie d'un support de fixation de l'appareil mobile des figures 1 à 3 ;
- la figure 5 représente l'appareil mobile des figures 1 à 4 équipant une montre-bracelet ;
- la figure 6 représente une plateforme interactive apte à équiper l'appareil mobile des figures 1 à 5 ;
- la figure 7 représente un deuxième exemple d'appareil mobile cet exemple ne représente pas l'invention telle que revendiquée, mais il aide à la compréhension de celle-ci;
- la figure 8 représente, sous forme d'un schéma bloc, un exemple d'appareil mobile selon l'invention ; et
- la figure 9 représente un exemple de réalisation d'un ensemble selon l'invention.

### Description de modes de réalisation

Dans la suite de la description, l'appareil mobile selon l'invention est considéré comme étant adapté à équiper une montre, et plus particulièrement un boîtier d'une montre-bracelet. Néanmoins, l'appareil mobile peut équiper tout type de boîtier, par exemple le boîtier d'une montre intelligente ou d'un chronomètre. Les supports de fixation ci-après décrits dans les figures permettent de greffer, successivement, au moins l'écran d'affichage de l'appareil mobile générique à différentes montres portées par l'être humain.

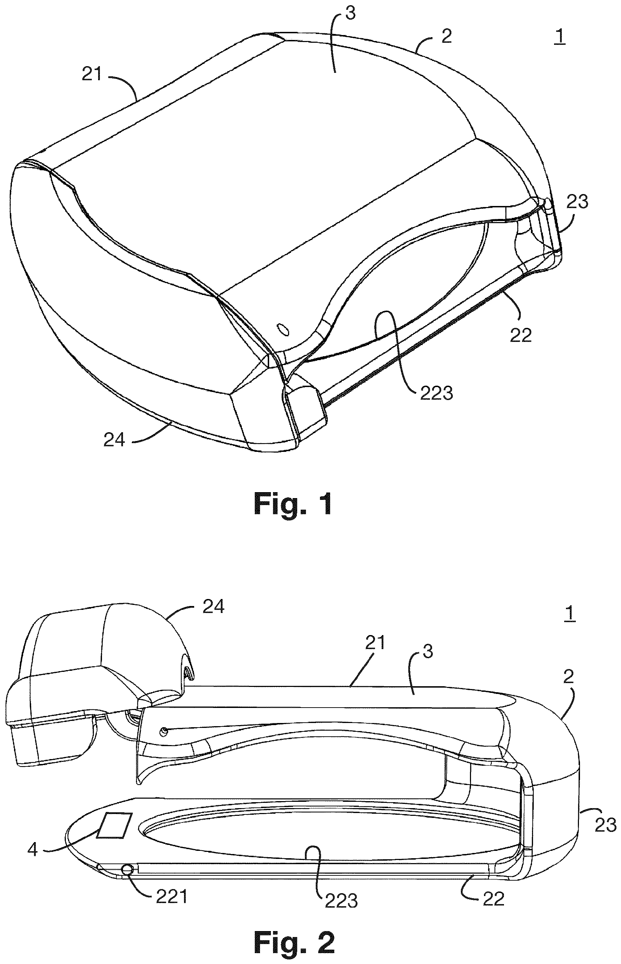

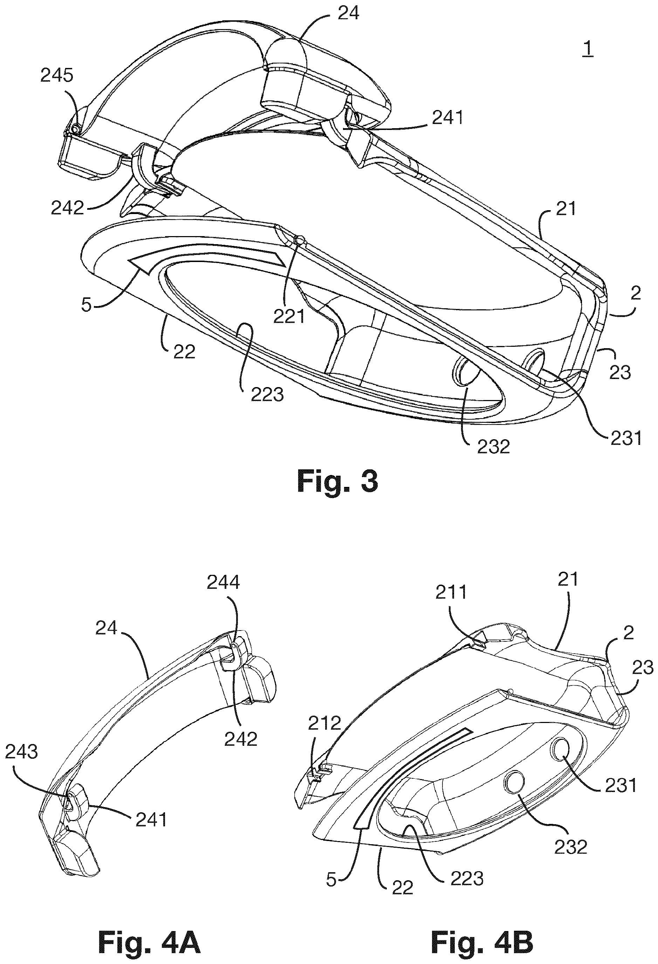

Les figures 1 à 4 représentent, dans quatre vues différentes, un premier exemple d'appareil mobile. La figure 1 représente, dans une vue de trois-quarts, l'appareil mobile dans une position dite fermée. Les figures 2 et 3 représentent, dans une vue de côté et une vue de trois-quarts, l'appareil mobile dans une position dite ouverte. La figure 4A représente, dans une vue de trois-quarts selon un premier point de vue, un capot latéral de fermeture de l'appareil mobile. La figure 4B représente, dans une vue de trois-quarts selon un deuxième point de vue, une partie d'un support de fixation de l'appareil mobile. L'appareil mobile 1 comporte un support de fixation 2, un écran d'affichage 3, un module électronique 4, représenté sur la figure 2, et des moyens d'alimentation 5, représentés sur les figures 3 et 4B. Le support de fixation 2 comporte une première partie formant un couvercle 21, une deuxième partie formant un fond 22, et une troisième partie, appelée flanc latéral 23 reliant le couvercle 21 au fond 22, de manière à former un profil en U. Ce profil est adapté à venir entourer un boîtier d'une montre, comme expliqué plus loin. Le support de fixation 2 peut en outre recouvrir tout ou partie des cornes du boîtier de la montre. De préférence, le couvercle 21, le fond 22 et le flanc latéral 23 sont formés d'un seul bloc, par exemple par moulage ou impression tridimensionnelle. Le support de fixation 2 peut aussi comporter un capot latéral de fermeture 24 apte à prendre une position fermée, comme représenté sur la figure 1, et une position ouverte, comme représenté sur les figures 2 et 3. Dans la position fermée, le support de fixation 2 présente un profil en O. Le changement de position est réalisé en prévoyant un mécanisme de charnière. Le capot latéral de fermeture 24 comporte deux pattes 241, 242 présentant des premiers évidements 243, 244 s'étendant selon un axe de rotation, et le couvercle 21 comporte des deuxièmes évidements 211, 212. Des broches viennent se loger dans les évidements 243 et 211 d'une part, et 244 et 212 d'autre part, de manière à former une liaison pivot. Bien entendu, tout autre mécanisme peut être prévu pour faire passer le capot latéral de fermeture 24 de la position ouverte à la position fermée. Le mécanisme de charnière peut être agencé de manière à empêcher un changement de la position du capot latéral de fermeture 24 sous l'effet de la gravité ou d'un frottement contre un objet. En l'occurrence, le matériau des pattes 241, 242, et celui du couvercle 21 peuvent être choisis en fonction de leur coefficient de frottement. Les pattes 241, 242 et les broches peuvent aussi être ajustées serrées dans les évidements 211, 212, et 243, 244.

Selon une forme particulière de réalisation, le support de fixation 2 comporte, en outre, des moyens de verrouillage de la position du capot latéral de fermeture 24. Ces moyens de verrouillage, peuvent empêcher toute ouverture accidentelle du capot latéral de fermeture 24. Ils consistent par exemple en un mécanisme apte à se libérer par déformation ou déplacement d'un organe d'accroché, tels que anneaux élastiques. Ils peuvent également consister en des ergots, vis, écrous, rainures, arrêtoirs, ou tout autre moyen adéquat. Dans l'exemple de réalisation des figures 1 à 4, les moyens de verrouillage comportent des tétons 221 formés sur le fond 22, et des troisièmes évidements 245 formés sur le capot latéral de fermeture 24. Les tétons 221 viennent chacun coopérer avec un évidement 245 dans la position fermée afin de maintenir cette position.

Le support de fixation 2 peut comporter, comme représenté sur les figures 3 et 4, des trous débouchants 231, 232 formés sur le flanc latéral 23 pour le passage d'une chaîne. La chaîne peut assurer un moyen d'attache supplémentaire de l'appareil mobile au poignet du porteur de la montre. Elle forme alors un moyen de sécurisation de la montre et de l'appareil mobile. La chaîne peut aussi permettre à un utilisateur de porter l'appareil mobile autour du cou. Bien entendu, l'appareil mobile pourrait comporter tout autre moyen d'attache en plus du support de fixation 2, tel que par exemple un bracelet autonome.

Dans le cas où l'appareil mobile équipe une montre-bracelet, le fond 22 du support de fixation 2 est agencé pour pouvoir se loger entre le fond du boîtier de la montre, et un poignet du porteur de la montre. Le fond 22 peut présenter une épaisseur relativement faible, par exemple inférieure ou égale à 2 millimètres (mm). Le support de fixation 2 peut alors venir s'enchâsser autour du boîtier de la montre alors que celle-ci est déjà en place sur le poignet de l'utilisateur.

Dans le but de diminuer encore l'épaisseur du fond 22, ce dernier peut comporter un évidement 223, débouchant ou non, dans lequel vient s'insérer une partie du fond du boîtier de la montre.

Le support de fixation 2 est de préférence formé dans un matériau transparent, par exemple en plastique transparent, en silicone, en Gorilla (marque déposée) Glass, ou en céramique transparente. D'autres matériaux, transparents ou non, peuvent aussi être utilisés. Si tout le support de fixation 2 n'est pas réalisé dans un matériau transparent, il est préférable de réaliser au moins le couvercle 21 dans un matériau transparent, à moins de vouloir cacher entièrement l'objet de valeur de regards indiscrets.

Le support de fixation 2 forme un dispositif de protection de la montre sur laquelle il est fixé. En effet, sa forme en O forme un contour fermé et définit un compartiment de protection pour la montre. Les chocs et les rayures éventuels ne sont plus directement appliqués sur le boîtier de la montre, mais sur l'appareil mobile.

L'écran d'affichage 3 est par exemple intégré dans le couvercle 21. Le couvercle 21 peut comporter un trou débouchant dimensionné pour accueillir l'écran d'affichage 3, de sorte qu'il forme une partie du couvercle 21. L'écran d'affichage 3 peut aussi être disposé sur le couvercle 21, dans un alésage ou en surépaisseur du couvercle 21.

L'écran d'affichage 3 est avantageusement agencé pour laisser visible la surface qu'il recouvre, notamment, la première surface extérieure du boîtier contenant le cadran de la montre, en l'absence d'information affichée sur l'écran d'affichage 3. L'écran d'affichage 3 présente un coefficient de transmission supérieur ou égale à 50%, de préférence supérieur ou égale à 75% dans la bande de longueurs d'ondes visibles. Sur sa périphérie, l'écran d'affichage 3 peut présenter un coefficient de transmission inférieur à 50%, par exemple du fait de la présence de son électronique de commande. L'électronique de commande couvre cependant une surface inférieure à 20% de la surface totale de l'écran d'affichage 3. Lorsque l'appareil mobile n'est pas utilisé, l'utilisateur peut donc visualiser le boîtier de la montre sans être gêné. Dans le but de faciliter la lecture des informations affichées sur l'écran d'affichage 3, ce dernier peut aussi être agencé de manière à ce que, lorsqu'il affiche une ou plusieurs informations, le boîtier de la montre ne soit pas visible à travers l'écran d'affichage. Un tel mode d'affichage peut notamment être réalisé en faisant afficher un fond d'écran opaque.

Selon une forme particulière de réalisation, l'écran d'affichage 3 est tactile. Autrement dit, il comporte des moyens disposés sur l'écran d'affichage formant une interface d'acquisition pour l'utilisateur. Tout type de technologie d'écran tactile peut être utilisé, notamment les écrans tactiles résistifs et les écrans tactiles capacitifs. L'écran d'affichage 3 peut comporter un mécanisme de déverrouillage de l'interface d'acquisition, afin d'éviter toute saisie non intentionnelle. Le mécanisme de déverrouillage peut par exemple se présenter sous la forme d'un curseur à faire glisser entre deux points prédéterminés de l'écran d'affichage, ou le long d'un parcours prédéterminé.

Le module électronique 4 peut être intégré dans le fond 22 du support de fixation 2. Il peut également être disposé ailleurs que sur le support de fixation 2. À titre d'exemple, il peut être fixé au bracelet de la montre équipée de l'appareil mobile.

Le module électronique 4 doit être capable d'exécuter une ou plusieurs applications mobiles. Par application mobile, on entend tout logiciel informatique contenant une suite d'instructions accomplies en vue de remplir une fonctionnalité donnée. À titre d'exemple, l'application mobile peut consister en un jeu vidéo, un agenda électronique, ou un lecteur de musique numérique. Bien entendu, ces exemples d'applications ne sont pas limitatifs et bien d'autres applications peuvent être envisagées, en fonction des ressources de l'appareil mobile.

Le module électronique 4 comporte par exemple un réseau prédiffusé programmable (FPGA). Il peut aussi comporter une architecture logicielle ou partiellement logicielle. Le module électronique 4 peut alors consister en un processeur ou un microprocesseur associé à une mémoire, par exemple une mémoire flash. La mémoire contient la ou les applications mobiles, et le microprocesseur les exécute.

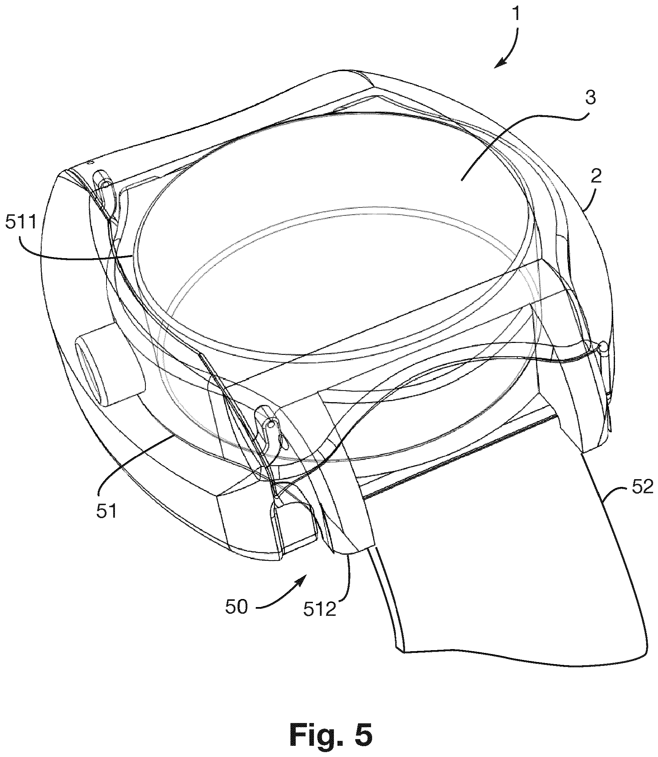

La figure 5 représente l'appareil mobile 1 décrit en référence aux figures 1 à 4 équipant une montre-bracelet. La montre bracelet 50 comporte un boîtier 51, et un bracelet 52. Le boîtier 51 présente une forme générale cylindrique. Il comporte une surface extérieure formant un cadran, un verre de protection 511 recouvrant le cadran, et des cornes de boîtier 512 auxquelles est fixé le bracelet 52.

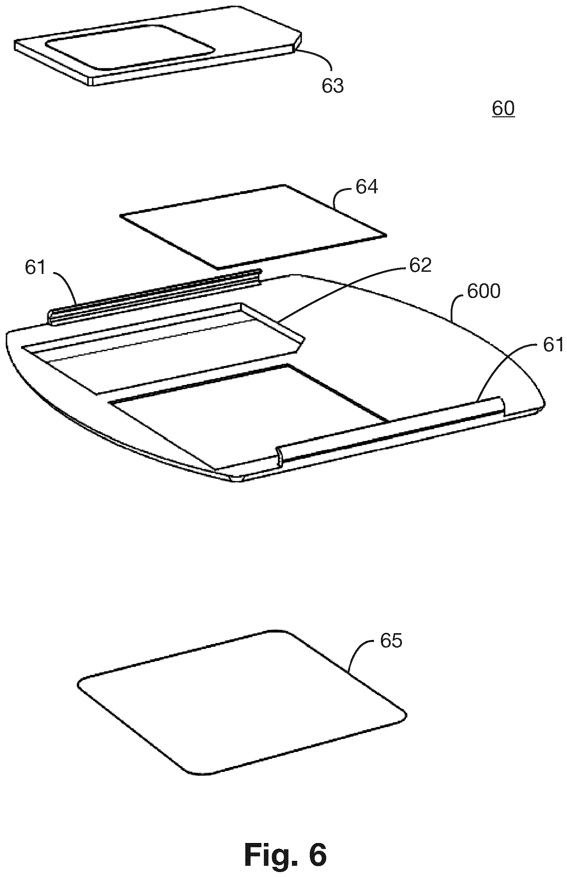

La figure 6 représente une plateforme interactive apte à équiper l'appareil mobile 1 décrit en référence aux figures 1 à 5. La plateforme interactive 60 prend par exemple la forme générale d'une plaque 600. La plaque est de préférence suffisamment fine, par exemple de l'ordre d'un millimètre, afin de pouvoir être positionnée entre le fond 22 du support 2 et le poignet d'un utilisateur. La plateforme interactive 60 comprend deux rebords périphériques d'accroché 61 apte à venir s'accoupler par déformation élastique au fond support 22 du support 2. Tout autre moyen de liaison pourrait être prévu sur l'appareil mobile 1 et/ou la plateforme interactive 60 pour permettre de fixer de manière amovible la plateforme interactive 60 au support 2. Il pourrait notamment s'agir d'une rainure formée dans le support 2, dans laquelle pourrait coulisser la plateforme interactive 60. Dans l'exemple de la figure 6, la plateforme interactive 60 comporte un logement 62 pour une carte SIM 63, une étiquette 64 de communication en champ proche (tag NFC), et un code à barres bidimensionnel 65 fixé ou imprimé sur la plaque 600 (par exemple un flashcode ou un QR code). La plateforme interactive 60 pourrait comporter d'autres moyens de communication et d'information, comme par exemple une étiquette d'identification par radiofréquence, mieux connue sous le terme de puce RFID, ou toute carte à puce sans contact. Du fait de sa localisation, la plateforme interactive 60, interchangeable, forme un support de données relativement sécurisé. En particulier, lorsque l'appareil mobile équipe une montre-bracelet portée par un utilisateur, la plateforme interactive 60 n'est pas visible. Elle permet ainsi de stocker des données sécurisées de l'utilisateur, par exemple des informations sur sa santé (passeport médical ou suivi de son état de santé), des informations bancaires et/ou des clés d'accès électroniques à des bâtiments, des chambres d'hôtels, ou des véhicules.

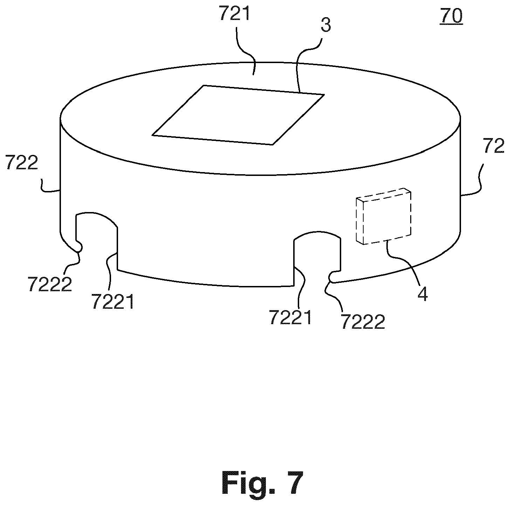

La figure 7 représente un deuxième exemple d'appareil mobile. L'appareil mobile 70 de la figure 7 se distingue essentiellement de l'appareil mobile 1 des figures 1 à 5 en ce que le support de fixation 72 comporte un couvercle 721, de préférence transparent et comportant l'écran d'affichage 3, et un rebord périphérique 722 sur tout le pourtour du couvercle 721. Le rebord périphérique 722 est agencé pour venir recouvrir le pourtour latéral d'un boîtier de montre. Il peut comporter des échancrures 7221 pour permettre le passage des cornes du boîtier de montre. Le rebord périphérique 722 peut être réalisé dans un matériau présentant des propriétés élastiques, de sorte que le support de fixation 72 s'accouple avec le boîtier de montre par déformation élastique. Le rebord périphérique 722 peut notamment comporter des ergots 7222, par exemple au niveau des échancrures 7221, aptes à venir en appui sur un fond du boîtier, en l'occurrence sous les cornes du boîtier.

Dans l'exemple de réalisation de la figure 7, le module électronique 4 peut être intégré dans le rebord périphérique 722.

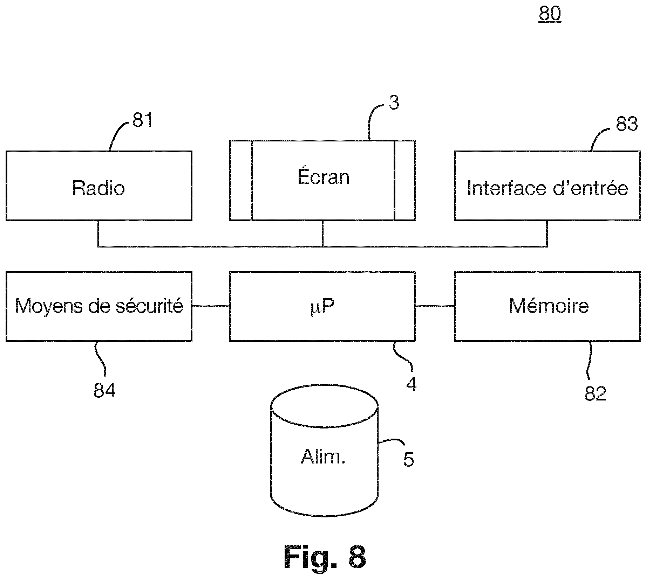

La figure 8 représente, sous forme d'un schéma bloc, un exemple d'appareil mobile selon l'invention. L'appareil mobile 80 comporte un écran d'affichage 3 et un module électronique 4. Il comporte de plus des moyens 81 de communication sans fil, des moyens 82 de stockage de données, une interface d'acquisition 83, des moyens 84 de sécurité, et des moyens 5 d'alimentation en énergie électrique. Les moyens 81 de communication sans fil comportent par exemple un émetteur-récepteur basé sur la technologie Bluetooth (norme IEEE 802.15.1) ou Wi-Fi (norme IEEE 802.11). L'appareil mobile selon l'invention peut alors échanger des données avec d'autres équipements électroniques, notamment pour les commander et/ou pour afficher sur l'écran d'affichage 3 des informations contenues et/ou traitées par ces équipements électroniques. Les moyens 82 de stockage de données peuvent comporter une mémoire de données électroniques. Il peut notamment s'agir d'une mémoire flash. L'interface d'acquisition 83 peut comporter des boutons poussoirs. Elle peut aussi être combinée avec l'écran d'affichage 3 pour former un écran tactile. Les moyens de sécurité 84 sont aptes à générer et/ou stocker des données sécurisées de l'utilisateur, par exemple des informations sur sa santé (passeport médical ou suivi de son état de santé), des informations bancaires et/ou des clés d'accès électroniques à des bâtiments, des chambres d'hôtels, ou des véhicules. Les moyens de sécurité 84 consistent par exemple en un algorithme de cryptage, ou en une mémoire de stockage. Ladite mémoire est alors de préférence intégrée dans le module électronique 4, ou sur une même carte électronique que le module électronique, afin d'empêcher un retrait de la mémoire sans destruction de l'appareil mobile 80. Les moyens 5 d'alimentation en énergie sont aptes à alimenter l'appareil mobile 80 pour le rendre autonome en énergie. Il s'agit par exemple d'une pile bouton. De préférence, les moyens 5 d'alimentation sont rechargeables. L'appareil mobile 80 comporte alors une prise avec ou sans fil pour recharger les moyens 5 d'alimentation depuis une source d'énergie externe. Ces moyens d'alimentation peuvent être intégrés dans l'appareil mobile ou déportés dans l'attache du bracelet. Ils peuvent être alimentés par énergie solaire, par ondes infrarouges, par induction, par mouvement du bras, par technique de rétrodiffusion ambiante ou par la partie mécanique de la montre de luxe.

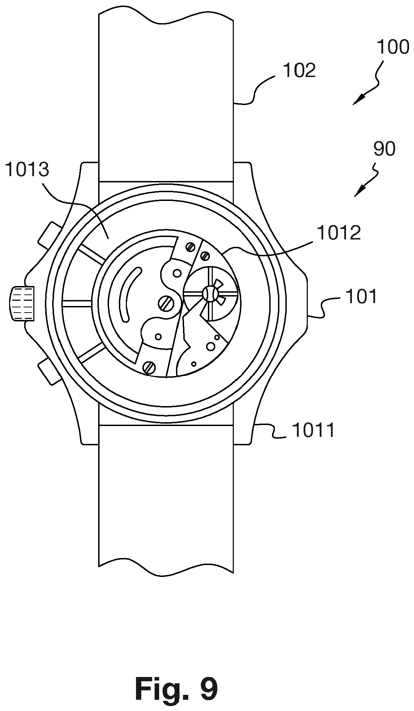

La figure 9 représente un exemple de réalisation de l'invention. Dans cet exemple de réalisation, l'appareil mobile 90 est en partie intégré au boîtier d'une montre. La montre 100 comporte un boîtier 101 avec ses cornes 1011 et son mécanisme 1012, et un bracelet 102. Le boîtier 101 comprend un logement 1013 agencé pour accueillir le module électronique 4, non visible sur la figure 9. De préférence, ce logement 1013 est accessible depuis le fond du boîtier 101, c'est-à-dire depuis le côté de la montre opposé à la première surface extérieure du boitier contenant le cadran. Le boîtier 101 peut présenter une épaisseur et/ou un diamètre supérieur à l'épaisseur nominale et au diamètre nominal du boîtier, afin d'accueillir le module électronique 4 sans modifier le mécanisme de la montre 100. Dans l'exemple de réalisation de la figure 9, le logement 1013 est formé à la périphérie du mécanisme 1012. Il présente ainsi une forme annulaire. Le module électronique 4 et, le cas échéant, les moyens de communication sans fil, les moyens de stockage de données, les moyens de sécurité, et les moyens d'alimentation en énergie électrique sont agencés de manière à prendre une forme annulaire correspondante.

L'appareil mobile 90 selon la figure 9 peut, de manière identique aux appareils mobiles 1 et 70, comporter un écran d'affichage disposé sur au moins une partie de la première surface extérieure du boîtier comportant le cadran de la montre 90. La fixation de l'écran d'affichage peut être réalisée au moyen d'un support de fixation 2 ou 72. Le boîtier de montre doit être conçu spécifiquement par un manufacturier pour recevoir un module électronique, en sus du mécanisme traditionnel. De ce fait, la fixation de l'écran d'affichage est, de préférence, réalisée par le manufacturier sur le boîtier. Du fait de l'intégration du module électronique 4 dans le boîtier 101 de la montre 100, le support de fixation 2, 72 peut être facilement dépourvu de fond, comme représenté sur la figure 7, ou comporter un fond évidé, comme représenté sur les figures 1 à 4. Des moyens de connexion entre l'écran d'affichage et le module électronique sont prévus. Ils peuvent notamment comporter une interface de contact sur le boîtier 101 de la montre 100.

Dans les différents exemples de réalisation de l'appareil mobile, il a été considéré que l'écran d'affichage était disposé sur une partie fixe du support de fixation. Autrement dit, il a été considéré que dans la configuration où l'appareil mobile équipe la montre, l'écran d'affichage est solidaire du boîtier de la montre. Néanmoins, le support de fixation peut être agencé de manière à laisser un ou plusieurs degrés de liberté en rotation et/ou en translation entre l'écran d'affichage et le boîtier de la montre. En particulier, la partie du support de fixation portant l'écran d'affichage peut être en liaison pivot ou en liaison glissière avec les parties du support de fixation rendues solidaires du boîtier.

L'appareil mobile décrit est apte à équiper une montre, portée ou attachée autour d'une partie du corps d'un être vivant, de préférence un être humain, l'appareil mobile comprenant :
un module électronique apte à exécuter une application mobile,
un écran d'affichage connecté au module électronique et agencé pour afficher des informations relatives à l'application mobile, et
un support de fixation agencé pour pouvoir fixer de manière amovible l'écran d'affichage à un objet lorsque ledit objet est porté ou attaché autour d'une partie du corps de l'être vivant.

Selon une forme particulière de réalisation, l'appareil mobile est apte à protéger et à équiper, par superposition, une montre portée ou attachée autour d'une partie du corps d'un être humain, telle que la taille, le poignet, la cheville ou le cou, la montre comprenant une première surface extérieure destinée à être aisément visible par l'être humain lorsqu'il porte la montre, l'appareil mobile comprenant :
un module électronique apte à exécuter une application mobile,
un écran d'affichage connecté au module électronique et agencé pour afficher des informations relatives à l'application mobile, et
un support de fixation dont les formes et les dimensions sont agencées pour que l'appareil mobile puisse équiper successivement toute montre portée par l'être humain, et pour pouvoir fixer, de manière amovible et par superposition, au moins l'écran d'affichage à une montre lorsque ladite montre est attachée autour d'une partie du corps de l'être humain,
l'appareil mobile étant agencé de manière à ce que, lorsque l'écran d'affichage est fixé à la montre, il couvre au moins une partie de la première surface extérieure de cette montre.

Le module électronique doit être capable d'exécuter une ou plusieurs applications mobiles. Par application mobile, on entend tout logiciel informatique contenant une suite d'instructions accomplies en vue de remplir une fonctionnalité donnée. À titre d'exemple, l'application mobile peut consister en un jeu vidéo, un agenda électronique, ou un lecteur de musique numérique. L'appareil mobile peut aussi fournir des applications mobiles dites connectées, c'est-à-dire échangeant des données avec des dispositifs externes, par liaison filaire ou sans fil. En particulier, les applications mobiles peuvent être un client de messagerie électronique, un navigateur web, ou un assistant à la navigation par géolocalisation par satellites. L'appareil mobile peut aussi communiquer avec d'autres appareils mobiles, notamment avec un assistant numérique personnel ou un téléphone mobile. Le module électronique peut alors exécuter des applications mobiles gérant l'émission et la réception d'appels téléphoniques et de minimessages (SMS) par le téléphone mobile, et permettant la consultation à distance d'informations contenues dans un appareil mobile externe, comme un agenda électronique ou des photos. Bien entendu, ces exemples d'applications ne sont pas limitatifs et bien d'autres applications peuvent être envisagées, en fonction des ressources de l'appareil mobile.

Le support de fixation permet de "greffer" au moins l'écran d'affichage à la montre, de sorte que cette montre de valeur présente un écran d'affichage fournissant des fonctionnalités identiques ou similaires à celles de tout appareil mobile. De préférence, l'écran d'affichage est rendu solidaire de la montre, ou d'une partie de la montre. En particulier, lorsque la montre comporte un écran ou une surface affichant des informations, par exemple le cadran de la montre, l'écran d'affichage de l'appareil mobile selon l'invention est rendu solidaire de l'écran ou de la surface d'affichage des informations. L'écran d'affichage de l'appareil mobile peut également venir recouvrir une autre partie de la montre. Il peut notamment recouvrir le bracelet d'une montre.

L'appareil mobile peut notamment équiper tout type de montre, quels que soient leur mécanisme, leur forme, et leur moyen d'attache à un utilisateur. En l'occurrence, la montre peut être une montre-bracelet, une montre gousset, une montre pendentif, une montre mécanique, une montre à quartz, une montre à affichage analogique ou numérique. L'appareil mobile peut en outre équiper un bracelet santé, un bijou ou tout dispositif électronique.

Le module électronique peut comporter un réseau prédiffusé programmable par l'utilisateur, ou FPGA selon l'expression anglo-saxonne "Field Programmable Gâte Array". Il peut aussi comporter une mémoire apte à stocker l'application mobile et des données traitées par l'application mobile, et un processeur ou un microprocesseur apte à exécuter l'application mobile.

L'écran d'affichage est par exemple un écran à cristaux liquides (LCD), un écran à diodes électroluminescentes (LED), un écran à diodes électroluminescentes organiques (OLED). L'écran peut comporter un verre Gorilla Glass (marque déposée) ou Willow Glass (marque de commerce). D'autres technologies d'affichage peuvent bien entendu être utilisées.

L'appareil mobile comporte de préférence une interface d'acquisition agencée pour permettre à l'utilisateur d'entrer des données pouvant être utilisées par l'application mobile. Cette interface d'acquisition forme un périphérique d'entrée pour le module électronique. Il peut s'agir d'un ou plusieurs interrupteurs, par exemple des boutons poussoirs, ou d'un clavier. L'interface d'acquisition peut aussi être formée en prévoyant un écran d'affichage tactile.

Selon une caractéristique préférée de réalisation, l'appareil mobile est réalisé de manière à limiter au maximum le changement d'aspect de la montre qu'il vient équiper. L'appareil mobile peut être conçu de manière à laisser visible au maximum la montre qu'il vient équiper. Les différents composants de l'appareil mobile peuvent présenter des dimensions réduites et/ou être réalisés avec des matériaux transparents. En particulier, le support de fixation peut être réalisé dans un matériau transparent, par exemple en céramique transparente, en plastique transparent, en Gorilla (marque déposée) Glass ou en Willow (marque commerciale) Glass. L'appareil mobile peut présenter une forme sensiblement similaire à la forme de la montre à équiper avec des dimensions sensiblement supérieures à celles de la montre ou de la partie à équiper, de préférence par superposition. L'appareil mobile peut ainsi protéger la montre ou une partie contre les risques de détériorations, en fonction des lieux et du changement d'activité du porteur. Selon une forme particulière de réalisation, le support de fixation présente des formes et des dimensions agencées pour que l'appareil mobile puisse équiper successivement différentes montres portées par l'être humain, et pour pouvoir fixer, de manière amovible et par superposition, au moins l'écran d'affichage à la montre considérée. En pratique, le support de fixation peut présenter des dimensions sensiblement supérieures à celles des montres qu'il vient équiper. Il est à noter que le support de fixation peut être adapté pour équiper des montres dont les dimensions diffèrent sensiblement d'une montre à l'autre. Pour ce faire, le support de fixation peut présenter des dimensions dont chacune est au moins égale à la plus grande dimension respective des différentes montres à équiper. Le support de fixation peut, en plus ou à la place, présenter une certaine élasticité.

L'appareil mobile peut aussi comporter des moyens pour communiquer des données avec d'autres équipements électroniques, notamment d'autres appareils mobiles tels qu'un téléphone portable. Ces moyens peuvent être des moyens de communication sans fil. À titre d'exemple, l'appareil mobile peut comporter un émetteur-récepteur basé sur la technologie Bluetooth (norme IEEE 802.15.1) ou Wi-Fi (norme IEEE 802.11). L'appareil mobile selon l'invention peut alors échanger des données avec d'autres équipements électroniques, notamment pour les commander et/ou pour afficher sur l'écran d'affichage des informations contenues et/ou traitées par ces équipements électroniques. En l'occurrence, les moyens de communication sans fil peuvent permettre de synchroniser des données avec un ou plusieurs équipements électroniques. L'appareil mobile peut également constituer un terminal informatique d'un réseau informatique, notamment dans l'informatique en nuage (ou "cloud computing" en anglais).

Selon une forme particulière de réalisation, l'appareil mobile comprend également des moyens de génération et/ou de stockage de données sécurisées. Les données sécurisées peuvent être des données relatives au porteur de la montre, par exemple des informations sur son état de santé (passeport médical), des informations bancaires, et/ou des codes d'accès à des bâtiments, des chambres d'hôtels, ou des véhicules. Les moyens de génération et/ou de stockage de données sécurisées peuvent consister en un algorithme de cryptage de données, ou en une mémoire de stockage. La mémoire peut notamment être agencée pour empêcher une lecture des données stockées sans autorisation de l'utilisateur. La mémoire peut notamment être inaccessible en lecture par un dispositif autre que l'appareil mobile. Les données stockées peuvent être cryptées.

L'appareil mobile est particulièrement adapté à une montre comprenant un boîtier. L'appareil mobile peut alors se fixer au boîtier. Par boîtier, on entend tout contenant apte à renfermer des éléments. Le boîtier peut présenter des formes générales diverses, notamment cylindriques ou parallélépipédiques. Il comporte une première surface extérieure destinée à être vue aisément par l'être vivant lorsqu'il porte la montre. Pour une montre, la première surface extérieure correspond à la surface sur laquelle est formé le cadran indiquant l'heure. Pour une montre-bracelet, cette surface est opposée à la surface venant au contact du poignet de l'utilisateur. La première surface extérieure, et notamment le cadran, peuvent être ou non recouverts d'un verre de protection. La première surface extérieure et le cadran peuvent présenter une surface plane ou courbe. L'appareil mobile est adapté à la forme du boîtier. En particulier, il peut être agencé de manière à ce que, lorsque l'écran d'affichage est fixé à la montre, il couvre au moins une partie de la première surface extérieure du boîtier. De préférence, le support de fixation est agencé pour pouvoir fixer l'écran d'affichage au boîtier. Selon d'autres formes de réalisation, l'appareil mobile peut être agencé pour couvrir d'autres parties d'une montre, notamment un bracelet.

Afin de faciliter l'utilisation de l'appareil mobile, celui-ci peut être agencé de manière à ce que, lorsque l'écran d'affichage est fixé à la montre, il couvre au moins une partie de la première surface extérieure du boîtier. Il peut notamment couvrir une moitié supérieure ou inférieure de cette première surface, ou l'ensemble de cette première surface. L'utilisateur ou le porteur de la montre accède ainsi intuitivement aux informations relatives à l'application mobile. Il est à noter que, dans le cas d'une montre, lorsque la première surface extérieure de la montre est recouverte d'un verre de protection, l'écran d'affichage vient sur ce verre de protection.

Toujours dans le but de limiter le changement d'aspect de la montre équipée de l'appareil mobile, l'écran d'affichage, couvrant au moins une partie de la première surface extérieure du boîtier, est agencé de manière à laisser visible cette première surface extérieure en l'absence d'information affichée sur l'écran d'affichage. Autrement dit, l'écran d'affichage est apte à prendre un état dans lequel il apparaît transparent à l'utilisateur de la montre. Bien entendu l'écran peut être partiellement opaque, notamment sur ses bords où est disposée l'électronique de commande. De préférence, l'écran présente, sur au moins 80% de sa surface, correspondant à sa surface d'affichage, un coefficient de transmission supérieur ou égale à 50% (avantageusement supérieur ou égale à 75%) dans la bande de longueurs d'ondes visibles par l'être vivant portant l'objet de valeur (entre environ 380 nm et environ 780 nm pour un être humain).

Selon une autre particularité, l'appareil mobile peut former un dispositif de protection de la montre qu'il équipe, tout en autorisant une transparence totale ou partielle sur celui-ci, et assurant ainsi une belle apparence esthétique de l'ensemble appareil mobile - montre. L'appareil mobile peut recouvrir tout ou partie de la montre, notamment tout ou partie du boîtier d'une montre, ce dernier élément étant une pièce unique non remplaçable car non détaillé en pièce détachée par les manufacturiers de montres de luxe. Il protège alors la montre des chocs et des frottements contre d'autres objets. Il peut aussi être prévu pour protéger la montre du rayonnement ultraviolet. L'appareil mobile peut également former un compartiment étanche à certains fluides, notamment l'eau et le sable.

Plus particulièrement, le support de fixation peut comporter une partie, appelée couvercle, agencée de manière à ce que, lorsque l'écran d'affichage est fixé à la montre, cette partie couvre au moins une partie de la première surface extérieure du boîtier.

L'écran d'affichage, couvrant au moins une partie de la première surface extérieure, peut alors former tout ou partie du couvercle du support de fixation.

Le boîtier de la montre peut comporter une deuxième surface extérieure formant un fond du boîtier. Pour une montre-bracelet, le fond correspond à la surface venant au contact du poignet de l'utilisateur.

Selon une forme particulière de réalisation, le support de fixation comporte une autre partie, appelée fond support, agencée de manière à ce que lorsque le support de fixation est fixé à la montre, le fond support couvre au moins une partie du fond du boîtier. Le couvercle et le fond support définissent alors entre eux un compartiment de protection apte à accueillir le boîtier. Ce compartiment peut envelopper l'ensemble du boîtier, ou seulement une partie. Ainsi, le support de fixation présente une forme sensiblement similaire ou complémentaire à la forme du boîtier ou une partie à protéger de celui-ci, et des dimensions sensiblement supérieures à celles du boîtier ou de la partie à protéger.

Le support de fixation peut comporter, en outre, un flanc latéral reliant mécaniquement le couvercle et le fond support, de sorte à former un U. Le couvercle forme une première branche du U, le fond une deuxième branche du U, et le flanc latéral une partie reliant les deux branches du U. L'appareil mobile peut ainsi venir s'accoupler au boîtier par glissement, alors que la montre est en place sur l'utilisateur. Avantageusement, le fond du support de fixation présente une épaisseur relativement faible, par exemple inférieure ou égale à 2 mm, afin de pouvoir venir entre le fond du boîtier de la montre et le poignet de l'utilisateur sans avoir à desserrer le bracelet de la montre.

Dans le but de renforcer la protection de la montre, le support de fixation peut aussi comporter un capot latéral de fermeture apte à prendre une première position, dite ouverte, dans laquelle le support de fixation peut venir se mettre en place sur le boîtier par glissement, et une deuxième position, dite fermée, dans laquelle le capot latéral de fermeture ferme une portion ouverte du U. Autrement dit, dans la position fermée, le support de fixation forme un contour fermé en O.

Dans une autre version du dispositif, le couvercle peut être monté sur le fond support par une charnière, une glissière en « T », « U », ou « L » ou tout autre moyen adéquat. De même, le capot latéral peut être monté sur le couvercle par une charnière, une glissière en « T », « U », ou « L » ou tout autre moyen adéquat.

L'appareil mobile peut comporter des moyens d'alimentation autonomes, c'est-à-dire indépendants de la montre équipée de l'appareil mobile. Les moyens d'alimentation peuvent être intégrés dans un même étui que le module électronique et les autres composants de l'appareil mobile, ou être déportés en totalité ou en partie. À titre d'exemple, les moyens d'alimentation peuvent être agencés pour être fixés sur le bracelet de la montre. Les moyens d'alimentation peuvent comporter une pile ou une batterie. Ils peuvent aussi comporter un capteur d'énergie solaire ou un capteur d'ondes infrarouges. Les moyens d'alimentation peuvent aussi comprendre des moyens pour générer de l'énergie électrique par un mouvement, par des moyens de recharge par induction, par rétrodiffusion ambiante, ou par des moyens pour récupérer l'énergie électrique et/ou mécanique du mécanisme de la montre équipée de l'appareil mobile. La rétrodiffusion ambiante est une nouvelle technologie qui permet d'utiliser l'énergie contenue dans les ondes environnantes présentes autour d'un objet pour générer des applications consommatrices d'énergie.

Le module électronique est agencé pour être intégré dans le boîtier de la montre. Le boîtier est dans ce cas agencé pour accueillir le module électronique. En l'occurrence, il comporte un logement formé dans le boîtier pour accueillir le module électronique. De préférence, ce logement est facilement accessible afin de permettre une insertion et un retrait aisés du module électronique. Le module électronique peut alors être facilement remplacé, par exemple par une version plus récente.

Il est à remarquer que l'appareil mobile selon l'invention, bien qu'il vienne se greffer sur une montre existante, présente toutes les caractéristiques pour fonctionner de manière autonome, indépendamment de cette montre. En l'occurrence, il comporte les moyens permettant de fournir une application mobile à un utilisateur (module électronique, écran d'affichage), sans utiliser de ressources matérielles et/ou logicielles de cette montre. Par ailleurs, l'appareil mobile est agencé pour venir se greffer à différentes montres déjà existantes, à fabrications commercialisées ou non. En particulier, les formes et les dimensions du support de fixation peuvent être agencées pour permettre la fixation à une montre existante. Ainsi, l'appareil mobile ne constitue pas un module dédié à certaines montres, mais un appareil générique pouvant se greffer à des montres dont les formes et les dimensions diffèrent ou plus généralement, une incrémentation d'appareils génériques standardisés pouvant se greffer à une gamme de montres de formes et de dimensions variées.

L'appareil mobile peut être associé à une plateforme interactive. La plateforme interactive, prenant la forme générale d'une plaque, est apte à se fixer de manière amovible à l'appareil mobile. Elle comprend par exemple des moyens d'accouplement élastique avec le fond support du support de fixation. La plateforme interactive peut comporter tout moyen de communication et d'information. À titre d'exemple, elle peut comporter une carte SIM ou un logement pour une carte SIM, une étiquette de communication en champ proche (tag NFC), une étiquette d'identification par radiofréquence (puce RFID), un code à barres monodimensionnel ou bidimensionnel (flashcode ou QR code). Ces moyens de communication et d'information peuvent notamment être utilisés comme supports de données confidentielles, ou comme clefs d'accès à des systèmes ou des lieux sécurisés.

Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Ensemble comprenant une montre (100) et un appareil mobile apte à équiper un boîtier (51, 101) de la montre,
le boîtier comprenant
▪ un mécanisme de montre ;
▪ une première surface extérieure destinée à être aisément visible par l'être humain lorsqu'il porte la montre ;
▪ une seconde surface extérieure, opposée à la première surface extérieure et formant un fond du boîtier ; et
▪ un logement (1013) adapté à recevoir un module électronique (4) de l'appareil mobile, le logement étant accessible depuis le fond du boîtier et agencé pour être facilement accessible, afin de permettre une insertion et un retrait aisés d'un module électronique de l'appareil mobile ;
l'appareil mobile (1, 70, 80, 90) comprenant :
▪ ledit module électronique (4) distinct du mécanisme de montre, apte à exécuter une application mobile et configuré pour être monté dans le logement (1013) du boîtier,
▪ un écran d'affichage (3) connecté au module électronique (4), disposé sur au moins une partie de la première surface extérieure, et agencé pour afficher des informations relatives à l'application mobile ; et
▪ un support de fixation (2) agencé pour pouvoir fixer de manière amovible l'écran d'affichage (3) à la montre (100).

2. Ensemble selon la revendication 1 selon lequel l'écran d'affichage est agencé de manière à laisser visible la première surface extérieure du boîtier en l'absence d'information affichée sur l'écran d'affichage.

3. Ensemble selon la revendication 1 selon lequel l'écran d'affichage est agencé pour ne pas laisser visible la première surface extérieure du fait de la présence d'une électronique de commande.

4. Ensemble selon la revendication 1 selon lequel l'écran d'affichage est agencé pour ne pas laisser visible la première surface extérieure lorsqu'au moins une information est affichée sur l'écran d'affichage

5. Ensemble selon l'une des revendications précédentes, dans lequel le logement (1013) du boîtier (101) est formé à la périphérie du mécanisme de montre (1012) et présente une forme annulaire, le module électronique (4) étant agencé de manière à prendre une forme annulaire correspondante.

6. Ensemble selon l'une des revendications 4 et 5, dans lequel le boîtier (101) présente une épaisseur supérieure pour accueillir le module électronique (4) sans modification du mécanisme de la montre.

7. Ensemble selon l'une des revendications 4 à 6, dans lequel la montre, par exemple à affichage analogique et/ou numérique, comporte un cadran, une surface sur laquelle est formé le cadran correspondant à la première surface extérieure.

8. Ensemble selon l'une des revendications précédentes, dans lequel la montre portée par l'être humain comporte un bracelet (52, 102) apte à attacher le boîtier (51, 101) au poignet de l'être humain, l'appareil mobile (1, 70, 80, 90) comprenant, en outre, des moyens (5) d'alimentation aptes à l'alimenter en énergie, les moyens d'alimentation étant agencés pour être fixés sur le bracelet (52, 102) de la montre (50, 100) ou être déportés en totalité ou en partie du module électronique et des autres composants de l'appareil mobile.

9. Ensemble selon l'une quelconque des revendications précédentes, dans lequel l'écran d'affichage (3) est tactile, de manière à former une interface d'acquisition (83) pour un utilisateur.

10. Ensemble selon l'une quelconque des revendications précédentes, comprenant, en outre, des moyens (81) de communication sans fil aptes à échanger des données avec un dispositif électronique.

11. Ensemble selon l'une des revendications précédentes, dans lequel les moyens (81) de communication sans fil sont agencés pour pouvoir commander à distance un fonctionnement du dispositif électronique.

12. Ensemble selon l'une des revendications précédentes comprenant, en outre, des moyens (84) de génération et/ou de stockage de données sécurisées.

13. Ensemble comprenant un ensemble selon l'une des revendications 1 à 11 et une plateforme interactive (60), l'ensemble étant agencé pour pouvoir fixer de manière amovible la plateforme interactive (60) à l'appareil mobile, la plateforme interactive (60) comprenant un moyen de communication et d'information tel qu'une carte SIM (63), une étiquette de communication en champ proche, une étiquette d'identification par radiofréquence, ou un code à barres monodimensionnel ou bidimensionnel.

## Patentansprüche

1. Anordnung aus einer Armbanduhr (100) und einem mobilen Gerät zum Ausstatten eines Gehäuses (51, 101) der Armbanduhr,
wobei das Gehäuse enthält:
▪ ein Uhrwerk;
▪ eine erste Außenfläche, die dazu bestimmt ist, für den Menschen beim Tragen der Uhr gut sichtbar zu sein,
▪ eine zweite Außenfläche, die der ersten Außenfläche entgegengesetzt ist und einen Boden des Gehäuses bildet; und
▪ eine Aufnahmeausnehmung (1013), die dazu geeignet ist, ein elektronisches Modul (4) des mobilen Geräts aufzunehmen, wobei die Aufnahmeausnehmung von dem Boden des Gehäuses aus zugänglich ist und so angeordnet ist, dass sie leicht zugänglich ist, um ein bequemes Einsetzen und Herausnehmen eines elektronischen Moduls des mobilen Geräts zu ermöglichen;
wobei das mobile Gerät (1, 70, 80, 90) enthält:
▪ das elektronische Modul (4), das von dem Uhrwerk separat vorliegt und dazu geeignet ist, eine mobile Anwendung auszuführen, und dazu ausgelegt ist, in der Aufnahmeausnehmung (1013) des Gehäuses montiert zu werden,
▪ ein Display (3), das mit dem elektronischen Modul (4) verbunden ist, an zumindest einem Teil der ersten Außenfläche angeordnet und dazu eingerichtet ist, Informationen anzuzeigen, die sich auf die mobile Anwendung beziehen; und
▪ eine Befestigungshalterung (2), die dazu eingerichtet ist, das Display (3) an die Armbanduhr (100) ablösbar befestigen zu können.

2. Anordnung nach Anspruch 1,
wobei das Display so angeordnet ist, dass es die erste Au ßenfläche des Gehäuses bei ausbleibender Information auf dem Display sichtbar lässt.

3. Anordnung nach Anspruch 1,
wobei das Display so angeordnet ist, dass es die erste Au ßenfläche bei vorhandener Steuerelektronik nicht sichtbar lässt.

4. Anordnung nach Anspruch 1,
wobei das Display so angeordnet ist, dass es die erste Au ßenfläche bei Anzeigen zumindest einer Information auf dem Display nicht sichtbar lässt.

5. Anordnung nach einem der vorangehenden Ansprüche,
wobei die Aufnahmeausnehmung (1013) des Gehäuses (101) am Umfang des Uhrwerks (1012) ausgebildet ist und eine Ringform aufweist, wobei das elektronische Modul (4) so angeordnet ist, dass es eine entsprechende Ringform annimmt.

6. Anordnung nach einem der Ansprüche 4 und 5,
wobei das Gehäuse (101) eine größere Dicke aufweist, um das elektronische Modul (4) ohne Änderung des Uhrwerks aufzunehmen.

7. Anordnung nach einem der Ansprüche 4 bis 6,
wobei die Armbanduhr mit beispielsweise analoger und/oder digitaler Anzeige ein Ziffernblatt enthält, wobei eine Fläche, an der das Ziffernblatt ausgebildet ist, der ersten Außenfläche entspricht.

8. Anordnung nach einem der vorangehenden Ansprüche,
wobei die vom Menschen getragene Armbanduhr ein Armband (52, 102) enthält, das dazu geeignet ist, das Gehäuse (51, 101) am Handgelenk des Menschen anzubringen, wobei das mobile Gerät (1, 70, 80, 90) ferner Versorgungseinrichtungen (5) zur Energieversorgung enthält, wobei die Versorgungseinrichtungen dazu eingerichtet sind, an das Armband (52, 102) der Armbanduhr (50, 100) befestigt zu werden oder vollständig oder teilweise vom elektronischen Modul und den weiteren Bestandteilen des mobilen Geräts weg verschoben zu werden.

9. Anordnung nach einem der vorangehenden Ansprüche,
wobei das Display (3) berührungsempfindlich ist, so dass es eine Erfassungsschnittstelle (83) für einen Benutzer bildet.

10. Anordnung nach einem der vorangehenden Ansprüche,
ferner enthaltend drahtlose Kommunikationseinrichtungen (81), die dazu geeignet sind, Daten mit einer elektronischen Vorrichtung auszutauschen.

11. Anordnung nach einem der vorangehenden Ansprüche,
wobei die drahtlosen Kommunikationseinrichtungen (81) dazu eingerichtet sind, um einen Betrieb der elektronischen Vorrichtung fernsteuern zu können.

12. Anordnung nach einem der vorangehenden Ansprüche,
ferner enthaltend Einrichtungen (84) zum Erzeugen und/oder Speichern von sicheren Daten.

13. Anordnung mit einer Anordnung nach einem der Ansprüche 1 bis 11 und mit einer interaktiven Plattform (60), wobei die Anordnung dazu eingerichtet ist, die interaktive Plattform (60) abnehmbar an das mobile Gerät befestigen zu können, wobei die interaktive Plattform (60) eine Kommunikations- und Informationseinrichtung, wie etwa eine SIM-Karte (63), ein Nahfeldkommunikations-Tag, ein Funkfrequenzidentifikations-Tag oder einen eindimensionalen oder zweidimensionalen Strichcode, enthält.

## Claims

1. An assembly comprising a watch (100) and a mobile apparatus able to equip a casing (51, 101) of the watch,
the casing comprising
• a watch mechanism;
• a first outside surface configured to be easily visible by the human being when he wears the watch;
• a second outside surface, which is an opposite surface to the first outside surface and which forms a bottom of the casing; and
• a housing (1013) adapted to receive an electronic module (4) of the mobile apparatus, the housing being accessible from the bottom of the casing and arranged to be easily accessible, in order to allow an electronic module to be easily inserted into and removed from the mobile apparatus;
the mobile apparatus (1, 70, 80, 90) comprising:
• said electronic module (4) distinct from the watch mechanism, able to run a mobile application and configured to be mounted in the housing (1013) of the casing,
• a display screen (3) connected to the electronic module (4), disposed on at least one part of the first outside surface, and arranged to display information relative to the mobile application; and
• a fastening mounting (2) arranged to be able to removably fasten the display screen (3) to the watch (100).

2. An assembly according to claim 1, wherein the display screen is arranged so as to leave visible the first outside surface of the casing in the absence of information displayed on the display screen.

3. An assembly according to claim 1, wherein the display screen is arranged so as not to leave visible the first outside surface on account of the presence of control electronics.

4. An assembly according to claim 1, wherein the display screen is arranged so as to not to leave visible the first outside surface when at least one item of information is displayed on the display screen.

5. An assembly according to one of the preceding claims, in which the housing (1013) of the casing (101) is formed at the periphery of the watch mechanism (1012) and has an annular shape, the electronic module (4) being arranged so as to take a corresponding annular shape.

6. An assembly according to one of claims 4 and 5, in which the casing (101) has a greater thickness to receive the electronic module (4) without modifying the watch mechanism.

7. An assembly according to one of claims 4 to 6, in which the watch, for example having an analog and/or digital display, comprises a watch face, a surface on which is formed the watch face corresponding to the first outside surface.

8. An assembly according to one of the preceding claims, in which the watch worn by the human being comprises a bracelet (52, 102) for attaching the casing (51, 101) to the wrist of the human being, the mobile apparatus (1, 70, 80, 90) further comprising supply means (5) for supplying energy, the supply means being arranged to be fastened to the bracelet (52, 102) of the watch (50, 100) or to be located in whole or in part remotely from the electronic module and from the other components of the mobile apparatus.

9. An assembly according to any one of the preceding claims, in which the display screen (3) is a touch screen, so as to form an acquisition interface (83) for a user.

10. An assembly according to any one of the preceding claims, further comprising, wireless communication means (81) for exchanging data with an electronic device.

11. An assembly according to one of the preceding claims, in which the wireless communication means (81) are arranged to be able to remotely control an operation of the electronic device.

12. An assembly according to one of the preceding claims, further comprising, means (84) for generating and/or storing secure data.

13. An assembly comprising an assembly according to one of claims 1 to 11 and an interactive platform (60), the assembly being arranged to be able to removably fasten the interactive platform (60) to the mobile apparatus, the interactive platform (60) comprising a communication and information means such as a SIM card (63), a near field communication tag, a radio frequency identification tag, or a single dimensional or two dimensional bar code.
